Europäisches Patentamt

European Patent Office

Office européen des brevets

(11) Publication number: **0 230 767**

**A1**

(12) **EUROPEAN PATENT APPLICATION**

(21) Application number: **86309964.4**

(22) Date of filing: **19.12.86**

(51) Int. Cl.⁴: **A01G 13/10**

(30) Priority: **20.12.85 GB 8531361**
**30.07.86 GB 8618579**
**03.06.86 GB 8613418**

(43) Date of publication of application:
**05.08.87 Bulletin 87/32**

(84) Designated Contracting States:
**AT BE CH DE ES FR GB GR IT LI LU NL SE**

(71) Applicant: **Monro Alexander & Co Ltd.**
**Newleaze Great Somerford**
**Chippenham Wiltshire SN15 5EN(GB)**

(72) Inventor: **Monro, Alexander Hamish**
**Newleaze farm Great Somerford**
**Chippenham Wiltshire SN15 5EN(GB)**
Inventor: **Jeffs, Keith Derek**
**KM Packaging Services Ltd., 14 Chapel**
**Road, Weldon**
**Corby, Northants NN17 3HP(GB)**

(74) Representative: **Arthur, George Fitzgerald et al**
**KILBURN & STRODE 30, John Street**
**London WC1N 2DD(GB)**

(54) **Tree or plant protection sleeve.**

(57) A jacket (12) for protecting a tree or plant stem (11) comprises a sheet of extruded polypropylene, which is wrapped around the stem so that the ends are in overlapping relationship, after which a tie or other fastening means is used to secure the two ends in overlapping relationship and also to secure the overlapping ends to a stake (26). The top edge of the sheet (12) may be softened, as by heating and stretching, or by a protective layer (34) to avoid chafing of the stem.

FIG. 3

EP 0 230 767 A1

## TREE OR PLANT PROTECTION SLEEVE

The invention relates to sleeves or jackets for protecting trees or plants and is a development of the invention the subject of European Patent Application No. 84305061.8 published 13 February 1985. The specification and drawings of that application are incorporated in the present application.

In that application the sleeve was preformed to be of tubular shape, whether or circular, square or hexagonal section, and for many applications that is quite adequate.

According to the present invention a jacket for protecting a tree or plant stem combines a sheet arranged to be wrapped around the stem and means for holding the ends of the sheet in overlapping relationship. The holding means may be constituted by one or more ties passing through both thicknesses of the sheet and being available for securing to a stake. The stake may have one side in contact with the surface of the sheet.

With some saplings and other plants which spread from low on the stem, it is not easy to position a sleeve which has been preformed without damaging the top of the sapling, and according to the present invention a sleeve is formed around the sapling stem after it has been planted by wrapping opposite ends of the jacket into overlapping relationship and securing them.

Preferably, the sleeve is of triangular form, made up by folding about two or three parallel longitudinal fold lines.

The sheet material wil generally be preformed with two pairs of holes, one pair in each overlapping end for each tie. There will usually be a vertical line of two or three ties.

The tie can be of wire or cord, but is preferably in the form of a plastic strap having a socket at one end for receiving and retaining the other, free, end.

The sleeve ends may be held in overlapping relationship by one or more plugs passing through both thicknesses of the sheet and a tie extending through a transverse hole in the, or each, plug.

The, or each, plug is conveniently a moulding, for example, of nylon or other plastics material and conveniently has a back plate which stops the plug from being pulled through overlapping holes in the sheet edges. The plug part is conveniently of cylindrical form with a transverse hole spaced from the back plate by at least twice the thickness of the sheet material.

The preferred form of plug has projections from the plug portion, preferably annular projections, one nearer to, and one further from, the back plate. The projection nearer to the back plate can extend into the material for forming the sleeve while the projection further from the back plate can project over the surface of the material remote from the back plate.

According to another aspect of the invention a plug for holding overlapping edges of sheet material in overlapping relationship comprises a back and a stem with a transverse hole in the stem spaced from the surface of the back. The stem amy also be provided with one or two projections, preferably annular projections for retaining the back in a hole in one edge of the sheet material.

The sleeve is conveniently extruded polypropylene of cellular form with inner and outer layers and transverse spacers. It may include a brown tint or other colouring so that the sleeve will not be unsightly in use and also it may include a predetermined amount of ultra violet radiation inhibitor so that the life of the sleeve before it decays due to radiation can be controlled.

The invention includes a kit of parts consisting of a sheet for forming the jacket, and at least one tie for holding overlapping edges of the formed sleeve in overlapping relationship. The kit may include one or more plugs.

The sheet may be formed with fold lines for defining folds enabling it to be easily folded into triangular shape.

The kit may include a washer for each tie, which may have a pair of holes corresponding to the holes in the edges of the sheet. The kit may also include a square, triangular, or round stake.

According to another aspect of the invention, a sleeve for protecting a tree or plant stem is of triangular form formed by folding flat sheet about two or three parallel longitudinal fold lines.

If the edge of the jacket is sharp, the stem of the sapling could be chafed, and according to a further aspect of the invention, a jacket for protecting a sleeve or plant stem comprises a sheet arranged to be wrapped around the stem which has means protecting a sharp edge of the sheet to avoid chafing on the stem, for example, being constituted by a heated and stretched portion of the edge of the sheet, or means of a covering strip.

The invention includes a method of forming a soft edge on a sharp edged sheet of polypropylene or other plastics material, in which the material is heated at a local strip at the edge, and the heated material is stretched.

The invention also includes a machine for forming a soft edge on a sharp edged sheet of polypropylene or other plastics material including a surface for supporting the sheet clamping means for locally clamping a strip of the sheet to the support, stretching means including a clamp for clamping to a part of the sheet beyond the clamping means, means for locally heating the sheet material between the first and second clamps, and means for moving the stretching means in relation to the clamping means to stretch the material between the two clamping means.

The invention also includes a sheet of polypropylene or other plastics material having a softened edge where the material has been heated and locally stretched.

The invention may be carried into practice in various ways, and one embodiment will now be described by way of example with reference to the accompanying drawings, in which:-

Figure 1 is a perspective view of a sleeve embodying the invention in use;

Figure 2 is a section through one of the plugs in Figure 1 to an increased scale;

Figure 3 is a view similar to Figure 1 of an alternative form of the invention;

Figure 4 is top view of the sheet as supplied for forming the sleeve;

Figure 5 is a detail to an increased scale of Figure 4;

Figure 6 is a detail of a protective arrangement for the top edge of the sheet;

Figure 7 is a similar view of an alternative to the arrangement of Figure 6;

Figure 8 is an elevation, partly in section, of a machine for forming a softened edge to the sheet;

Figure 9 is a detail of Figure 8 to an increased scale; and

Figure 10 is a view corresponding to a part of Figure 1 showing the effect of softening the material edge by the method shown in Figures 8 and 9.

A sapling 11 is to be protected through the early part of its life in the open, and as soon as it has been planted the main part of the trunk is surrounded by a sleeve or jacket 12 formed from a sheet of extruded polypropylene of cellular construction. The jacket could be merely curved around the sapling 11, but preferably it is provided with a number of preformed longitudinal folds 13 so that it forms a many-sided paralleliped with two panels at opposite edges overlapping one another as indicated at 14. There may be about 2.5, 5 or 7.5 cm of radial clearance between the sapling and the jaecket.

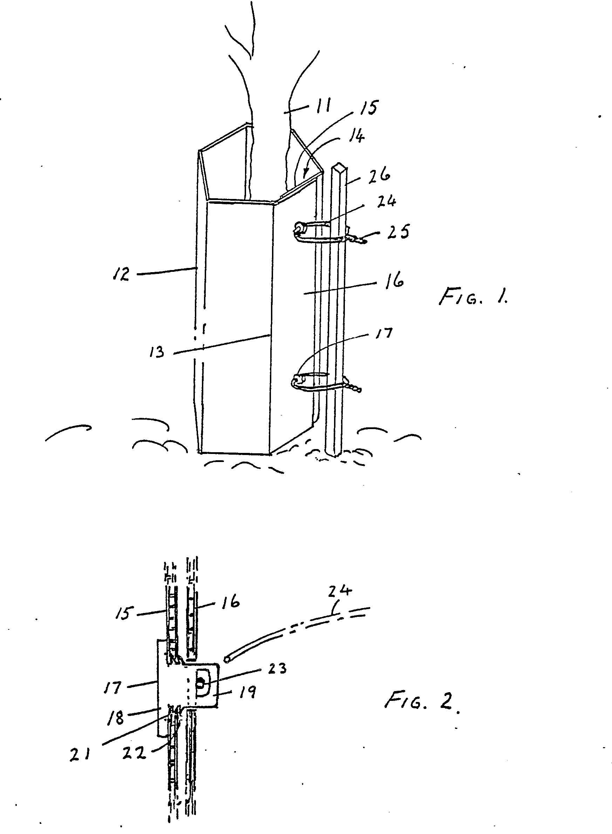

The overlapping edge panels 15 and 6 are held in overlapping relationship by a vertically spaced series of plugs 17. Each plug is secured in a hole in the inner panel 15 in the manner shown in Figure 2 which shows a section of one plug in detail.

The plug is a nylon moulding and is formed with a base plate 18 which bears against the inner face of the inner panel 15 and a projecting stub portion 19 which is generally of cylindrical form about an axis perpendicular to the centre of the back plate 17. The stud 19 is formed with first and second annular ring projections 21 and 22, of which the first can bite into the material of the panel 15 which has a hole in it of such a diameter as to be gripped by the projection 21. The outer projection 22 bears against the outer face of the panel 15 so that the plug is firmly located in the panel.

The overlapping panel 16 is formed with a clearance hole for fitting over the stud portion 19 of each plug.

The stub portion 19 is formed with a transverse hole 23, through which a wire tie 24 can be passed to retain the panels 15 and 16 in overlapping relationship.

Then the two ends of the tie 24 can be twisted or otherwise secured together as at 25 around a stake 26. Although in Figure 1 the stub is shown spaced from the jacket, in many applications it will bear against the jacket wall.

The sleeve can be positioned very easily and then provides the sapling with protection against winds and defines a local area around the stem of the sapling in which the temperature can be noticeably higher than the ambient temperature. In general, the jacket 12 will be allowed to rest on the ground, but there may be applications where it is preferred to lift it a little, in which case it can be suspended from the stake 26.

Although the tie has been described as being a wire it could alternatively be a cord, for example. It is also possible to use a preformed moulded plastics cable tie, which can be supplied with the plug. That may be easier to fasten around the stub, but will be more expensive than a length of wire or cord.

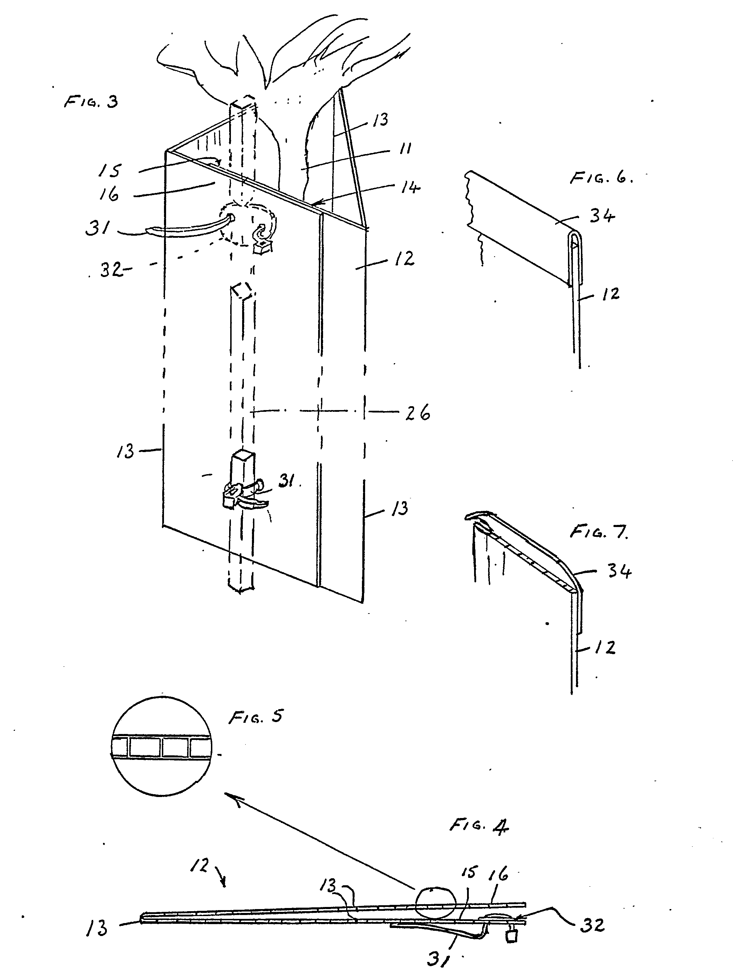

The alternative arrangement of Figures 3 and 4 has a three-sided jacket -which is more rigid than the six-sided jacket of Figures 1 to 2. A moulded plastics cable tie is shown at 31. In this case, each tie 31 passes through a pair of holes in the inner panel 15, and an overlapping pair of holes in the outer panel 16, and passes around the stake 26, after which the ends of the tie are secured together, to hold the sleeve in triangular shape, and to hold it securely to the stake.

There is preferably a washer 32 on the inside of the panel 15 to prevent the holes in the panel 15 being damaged due to the tie being pulled too tightly. The washer could be a disc of the sheet material having a corresponding pair of holes.

The tie might be of cord or wire as in the embodiment of Figures 1 and 2, but is preferably the plastics moulding 31, in the form of a strap with a box at one end, through a slot in which the other, free, end can be passed and pulled to tighten the loop. The strap can have teeth formed on it which engage an edge in the box slot acting rather like a ratchet to allow the loop to be easily tightened, but only enlarged with difficulty.

One example of a sleeve is formed from sheet material 36 cm wide with a central fold line, and two further fold lines, one on each side of the central fold line and 10 cm from it. The overlapping panels 15 and 16 are defined by the free ends beyond the two further folds and are each 8 cm wide. The holes are positioned so that the degree of overlap is 6 cm. Such a sleeve forms into an equilateral triangular paralleliped with sides of 10 cm.

Figure 4 shows one way in which the stack kit can be sold flat, for very easy forming and fitting round a sapling and to a stake.

The polypropylene is conveniently an extrusion having a section in the form of parallel spaced inner and outer walls interconnected by short transverse spaced webs as shown in Figure 5. This gives a reasonably strong construction which can be simply formed and is a good heat insulator and is reasonably weatherproof.

It is preferred that the polypropylene be coloured so that the sleeves are not eyesores and a light brown tint is satisfactory in many applications.

Polypropylene tends to disintegrate in response to the ultraviolet radiation in the atmosphere, and accordingly, an ultraviolet inhibitor will be included in the material in sufficient proportion to give the material a life of perhaps 3 to 5 years, after which the material will decay so that unsightly remains will not be left cluttering the landscape.

The sheet material may be sold in stacks in combination with plugs or washers for subsequent fitting and possibly also with the ties and a stake. Alternatively, the plugs may be fitted in the end panels 15 before the sheet material is stacked.

The sheet polypropylene described has one possible disadvantage in that the top edge tends to be rather sharp, and this may chafe against the stem or trunk of the sapling and cause some damage.

One possible solution to that difficulty is to provide the top edge of the sheet 12 with a folded over softer plastics strip 34 secured to either side of the jacket 12 by adhesive as shown in Figure 6. That provides a flexible soft edge, which should not damage the trunk of the sapling, and it also enables trade mark or descriptive material to be applied to the jacket by being printed on the strip 34 before it is secured into position.

Figure 7 shows an alternative, in which the added plastics strip 34 is merely secured to the jacket 12 at the inside of the top edge with a flexible flap projecting above the edge of the jacket to protect the trunk of the sapling.

Instead of adding a strip such as the strip 34, it is also possible to change the composition of the edge of the extruded polypropylene so that it is soft and flexible and does not present a sharp edge.

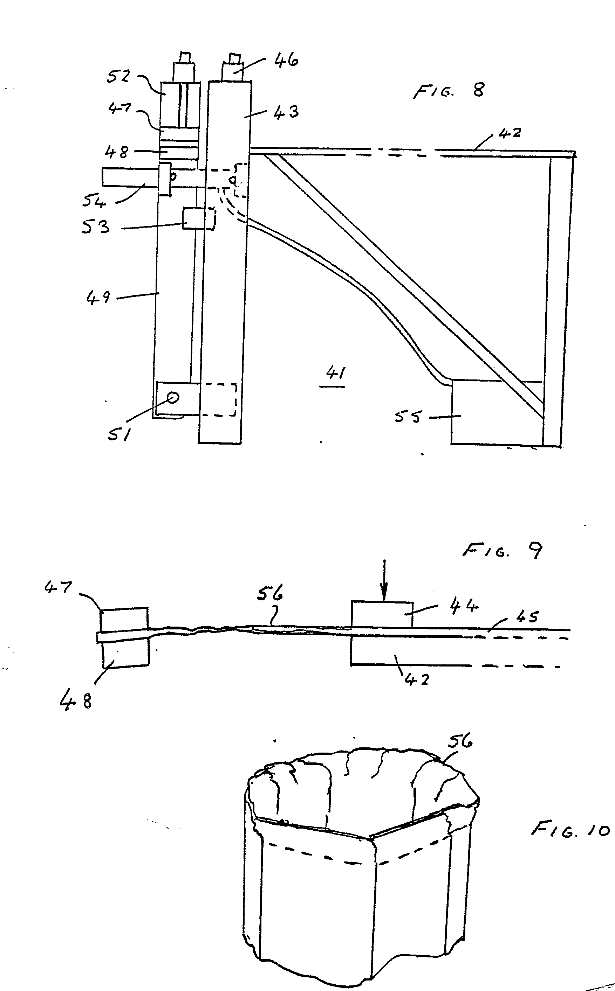

It has been discovered that this can be achieved by applying heat locally to the part of the edge to be deformed to a temperature of perhaps 60 °F (15.6 °C) and then to stretch the locally heated polypropylene. That has the effect of destroying the molecular structure and leaving the pulled part of the sheet as a soft flexible and solid sheet, which will not damage the trunk of the sapling. That is shown in Figure 10.

Figure 8 shows a machine suitable for deforming the edge of the plastic sheet in that way.

A bench 41 has a table 42, on which the polypropylene sheet can be laid with a clamp frame 43 at one end with what is to be the top edge of the jacket clamped in the frame and leaving a few centimetres projecting beyond the frame 43 to the left as seen in Figure 8. The clamp consists merely of a vertically movable jaw 44 - (Figure 9), which engages the upper surface of the polypropylene 45 and is forced, with a reasonable degree of pressure, against the upper edge of the table 42 by a conventional screw clamping device indicated generally at 46 in Figure 8. The lower surface of the jaw 44 is roughened to engage the polypropylene without excessively damaging its surface.

The protruding end of the sheet is clamped by a similar arrangement using a pair of jaws 47 and 48 carried on a stretching frame 49, which is pivotally mounted at its lower end 51 in relation to the clamp frame 43. One leg of the stretching frame has been omitted from Figure 8 in the interests of clarity and only the leg 52 is shown. This enables the jaws 47 to be seen in Figure 8 as well as an infrared or other heater 53 for applying heat to the projecting end of the polypropylene before it is stretched and a hydraulic actuator 54 driven from a motor and pump arrangement 55 mounted below the table 42 for causing the stretching frame 49 to pivot about 51 away from the clamp frame 43 to stretch the heated part of the polypropylene. Figure 9 shows, to an increased scale, the clamping arrangements while stretching is taking place. The polypropylene clamped between the respective clamps retains its structure pretty well, but the heated and pulled material between the clamps changes its composition and becomes a mass in the form of a soft flexible sheet 56. During the pulling, coloured polypropylene loses its colour and appears white.

After the clamped edge between the clamps 47 and 48 has been removed, the material can be folded up to form the jacket with the soft upper edge as shown in Figure 10.

In a typical example of a jacket 120 cm in height, a length of the polypropylene of about 2.5 cm might be stretched to about 15 cm to achieve the deformation of the material described above.

In order to avoid waste material, it is also contemplated that a sheet about 240 cm long could be supported on either side of its transverse centre by the clamps about 2.5 cm apart so that, after the intermediate part of the polypropylene has been heated, the clamps can be separated to stretch the heated material to about 15 cm. Then, the two sheets can be separated along the centre of the stretched band to form two sheets ready for forming into jackets without waste material.

## Claims

1. A jacket for protecting a tree or plant stem comprising a sheet (12) arranged to be wrapped around the stem (11), and means (17, 24 or 31) for holding the ends of the sheet in overlapped relationship and for holding the jacket to a stake (26).

2. A jacket as claimed in Claim 1, in which the holding means comprises a tie (31) passing through, or arranged to be passed through, both thicknesses of the sheet where there is overlap.

3. A jacket as claimed in Claim 1, in which the holding means comprise at least one plug (17) extending through, or arranged to extend through, holes in both thicknesses of the sheet where there is overlap and a tie (24) for passing through a hole (23) in the part of the plug (31) on one side of the overlapping thickness.

4. A jacket as claimed in any of the preceding claims, in which the holding means are positioned at a flat part of the sheet for location against the stake 26.

5. A jacket as claimed in any of the preceding claims, in which the sheet is of extruded polypropylene of cellular form with inner and outer layers and transverse spacers.

6. A jacket as claimed in any of the preceding claims, including means protecting a sharp edge of the sheet to avoid chafing on the stem.

7. A jacket as claimed in Claim 6, in which the protecting means comprises a heated and stretched portion (56) of the edge of the sheet.

8. A jacket as claimed in any of Claims 1 to 6, in which the protecting means comprises a covering strip (34).

9. A method of applying a jacket for protection of a tree or plant stem, in which a sheet (12) is wrapped around the stem and holding means (17, 24 or 31) is used to secure the overlapping ends of the sheet in overlapping relationship and to secure the wrapped around sheet to a stake (26).

10. A method of forming a soft edge (56) on a sharp edged sheet of polypropylene or other plastics material, in which the material is heated at a local strip at the edge, and the heated material is stretched.

11. A machine for forming a soft edge on a sharp edged sheet of polypropylene or other plastics material including a surface (42) for supporting the sheet (12), clamping means (44) for locally clamping a strip of the sheet to the support, stretching means (52) including a clamp (47, 48) for clamping to a part of the sheet beyond the clamping means (44), means (53) for locally heating the sheet material between the first and second clamps, and means (54) for moving the stretching means in relation to the clamping means to stretch the material between the two clamping means.

12. A sheet of polypropylene or other plastics material having a softened edge where the material has been heated and locally stretched.

FIG. 1.

FIG. 2.

0 230 767

Fig. 3

Fig. 6.

Fig. 7.

Fig. 5

Fig. 4

Neu ch... ...wly filed
No... ...posé

FIG. 8

41

FIG. 9

FIG. 10.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | EP-A-0 133 019 (MONRO ALEXANDER & CO. LTD.) <br> * figures 5, 7 * | 1,9 | A 01 G 13/10 |
| D,A | | 5 | |
| | --- | | |
| X | BE-A- 560 897 (DRAHTWERK J. ROSLER K.-G.) <br> * figures * | 1,2,9 | |
| A | | 3,4 | |
| | --- | | |
| Y | FR-A-2 483 170 (TREFILUNION SA) <br> * claims, figures * | 1-3,9 | |
| Y | DE-A-2 643 254 (LUDWIG HINTE SOLIPAC KG) <br> * claims, figures * | 1-3,9 | TECHNICAL FIELDS SEARCHED (Int. Cl.4) <br><br> A 01 G 13/00 |
| | ----- | | |

The present search report has been drawn up for all claims

| Place of search | Date of completion of the search | Examiner |
|---|---|---|
| BERLIN | 13-03-1987 | WUNDERLICH J E |